# FASCICULE DE BREVET EUROPEEN

(11) **EP 1 886 264 B1**
(45) Date de publication et mention de la délivrance du brevet: **17.03.2010**
(21) Numéro de dépôt: 06755038.4
(22) Date de dépôt: 05.05.2006
(51) Int. Cl.: G06K 19/077

(54) **ADAPTATEUR DE FORMAT A ADHESIF POUR DISPOSITIF A MEMOIRE ET PROCEDE DE FABRICATION**
KLEBENDER FORMATADAPTER FÜR EINE SPEICHERVORRICHTUNG UND VERFAHREN ZU SEINER HERSTELLUNG
ADHESIVE FORMAT ADAPTER FOR A STORAGE DEVICE AND METHOD FOR THE PRODUCTION THEREOF

(30) Priorité: 11.05.2005 FR 0551223
(43) Date de publication de la demande: 13.02.2008
(73) Titulaire: Gemalto SA, 92190 Meudon (FR)
(72) Inventeur: FIDALGO, Jean-Christophe, F-13420 Gémenos (FR); MARTINENT, Jean-François, F-13090 Aix en Provence (FR); ALLEYSSON, Blandine, F-13470 Carnoux (FR)
(86) Numéro de dépôt international: PCT/EP2006/062085
(87) Numéro de publication internationale: WO 2006/122882

(56) Documents cités:
- WO-A-00/49567
- WO-A-96/36009
- US-A1- 2002 160 630

## Description

La présente invention concerne le domaine des dispositifs à mémoire et des adaptateurs de format associés.

Elle concerne plus particulièrement un adaptateur de forme pour carte à puce permettant d'obtenir un autre format de carte à puce. Les différents formats visés sont de préférence les formats standards existants dans le domaine de la carte à puce et présentés ci-après.

II existe principalement trois formats standards de carte à puce sur le marché. Le premier "ID-1" est le format relatif à la norme ISO 7816 : 54mm x 85mm x 0,76mm, pour les cartes à puce essentiellement destinées à des opérations de communication, d'identification ou de télébilletique par exemple.

Le second "ID-000" est relatif à la norme dite Plug-in UICC, pour des carte à puce essentiellement destinées à être insérées dans un téléphone mobile mais pouvant le cas échéant être utilisé dans d'autres dispositifs de communication ou des lecteurs de type USB. Les cartes ID-000 ont un corps de carte de forme rectangulaire de 15mm x 25mm x 0,76mm, avec un détrompeur de 3mm par 3mm sur un coin du support de la carte.

Le troisième, depuis février 2004, est relatif aux cartes dites de troisième facteur de forme ou cartes mini-UICC dont la diminution de format résulte notamment d'une tendance à la miniaturisation des téléphones portables. Le format normalisé est 15mm X 12mm X 0,76mm avec également un détrompeur de 2,5mm par 2,5mm sur un coin du support de la carte.

Parmi les procédés de fabrication d'adaptateur, la demande de brevet EP 0638873 décrit la fabrication d'une carte support de mini-carte ayant une ouverture de réception de la mini carte et un film adhésif sensible à la pression collé sur surface arrière du support. Une mini carte à puce est fixée sur le film adhésif dans l'ouverture et peut être extraite du support, sans exercer de contrainte sur la mini carte et sans apparition d'excroissances sur le bord périphérique de la mini carte. De même, le document US2002/0160630 décrit la fabrication d'une carte support de mini-carte, et un film adhésif collé sur la surface arrière du support. Une mini-carte est fixée sur le film adhésif, dans l'ouverture et peut être extraite du support, sans exercer de contrainte sur la mini-carte et sans apparition d'excroissance sur le bord périphérique de la mini-carte.

Selon une variante la mini carte est fixée avec sa face avant dans l'ouverture et le film adhésif comporte un évidemment pour permettre l'accès aux plages de contact.

Cette solution présente l'inconvénient de ne pas permettre une préhension ou extraction facile de la mini-carte si l'adhésion est trop élevée. D'autre part, si l'adhésif a un pouvoir d'adhésion trop faible, il y a des risques de décollement du film adhésif de la carte support.

Le brevet US5677524 décrit une carte support au format ISO contenant une mini-carte reliée à la carte support par des bretelles prédécoupée, et au moins un ruban adhésif sensible à la pression collé sur la surface arrière de la carte et s'étendant partiellement sur la carte et mini-carte de manière à ce que lorsque les bretelles sont rompues, la mini carte demeure positionnée correctement dans le support et en peut être extraite et positionnée à nouveau sans contrainte. Plusieurs rubans peuvent être fixés pour augmenter la stabilité de la mini-carte.

Cette solution présente l'inconvénient dans le procédé de fabrication de requérir plusieurs rubans adhésifs au dos de la carte pour obtenir la stabilité de la mini-carte dans son logement; en outre, il y a des irrégularités de surface au dos de l'adaptateur.

L'invention vise principalement à résoudre les problèmes ci-dessus.

Elle a principalement comme objectif la conception d'un adaptateur pour mini-carte qui permette des montages / démontages répétés de la mini-carte de manière extrêmement facile tout en assurant une bonne stabilité de la mini-carte dans son logement et sans irrégularité de surface à l'arrière de la carte support

Un autre objectif de l'invention est de permettre une fabrication aisée de l'adaptateur,

Le principe de l'invention consiste à remplacer les rubans ci-dessus de l'art antérieur par une seule étiquette ou film adhésif comportant un évidement permettant une pression d'extraction de s'exercer sur la mini-carte à travers l'évidement; l'excédent de l'étiquette est de préférence supprimé après positionnement sur l'adaptateur.

A cet effet, l'invention a d'abord pour objet un adaptateur de format selon la revendication 1.

Cette configuration présente en particulier l'avantage de permettre des démontages répétés de la mini-carte ou dispositif à mémoire, notamment avec un doigt sans contrainte mécanique sur la mini-carte ou le support d'adaptateur, même sans déformation du film adhésif.

Du fait de la faible largeur de la marge adhésive, celle -ci n'est pas déformée outre mesure pour extraire le dispositif par pression d'un doigt.

Selon d'autres caractéristiques:
- l'épaulement est continu;
- l'épaulement a une largeur comprise entre 0,1 et 5 mm;
- l'évidement est dimensionné de manière à permettre une poussée sur la mini-carte directement avec un doigt à travers l'évidement;
- le film s'étend parfaitement jusqu'au contour externe du corps d'adaptateur;
- le corps d'attache comprend une mini-carte détachable destinée à la cavité;
- le corps d'adaptateur a un format externe égal au format Plug-in et la cavité est dimensionnée pour recevoir une carte mini-UICC;
- le corps d'adaptateur a un format égal au format ISO et sa cavité a un format correspondant à une carte mini-UICC, Plug-in UICC ou carte à mémoire aux formats SD, MMC, Mini SD, MMC Micro, Memory Stick, clef USB ou tout format de carte à mémoire ayant des contacts accessibles sur la face supérieure.

L'invention a également pour objet un procédé de fabrication d'un adaptateur de format pour dispositif à mémoire selon la revendication 12.

Ainsi avec un seul film dimensionné correctement et une seule étape de positionnement adapté, le procédé de fabrication devient aisé.

Selon un mode de mise en oeuvre préféré, le film adhésif est fourni avec un évidement interne, et l'évidement est sensiblement centré sur la cavité de manière à former une marge continue en bordure interne de la cavité.

Selon un autre mode de mise en oeuvre, on forme l'évidement par découpe, le film étant fixé sur le support.

Selon d'autres caractéristiques du procédé,
- le support est fourni avec une zone d'extraction (12) du corps de l'adaptateur;
- le film est déposé de manière à ce qu'il couvre au moins toute la zone d'extraction de l'adaptateur;
- une pré-découpe partielle de l'adaptateur est effectuée le long de d'une délimitation de sa zone d'extraction de manière à découper l'excédent de film adhésif hors de la surface d'adaptateur et à former une ligne prédéterminée de rupture rendant l'adaptateur détachable du support.

Selon une mise en oeuvre particulièrement intéressante du procédé :
- le support comprend également une zone d'extraction d'une mini-carte compatible avec l'adaptateur;
- en particulier, on a pré-découpé la mini-carte de manière à former une ligne prédéterminée de rupture rendant la mini-carte détachable du support.

L'invention a également pour objet une utilisation de l'adaptateur pour adapter une opération de fabrication de carte à puce à une opération de fabrication d'un dispositif à mémoire et/ou comme conditionnement du dispositif à mémoire.

D'autres particularités et avantages de l'invention apparaîtront à la lecture de la description, qui suit, donnée à titre d'exemple illustratif et non limitatif, et faite en référence aux figures annexées pour lesquelles :
- La figure 1 illustre une vue en coupe longitudinale de l'adaptateur de la figure 2 et une mini-carte en cours d'approche de la cavité ;
- La figure 2 illustre une vue de face de l'adaptateur selon un mode de réalisation de l'invention ;
- Les figures 3 à 6 illustrent un mode de mise en oeuvre du procédé d'obtention de l'adaptateur.
- La figure 7 illustre une utilisation d'un adaptateur au format ISO ID1 pour réaliser une opération de fabrication et/ou conditionnement sur une carte à mémoire de type MMC positionnée dans l'adaptateur.

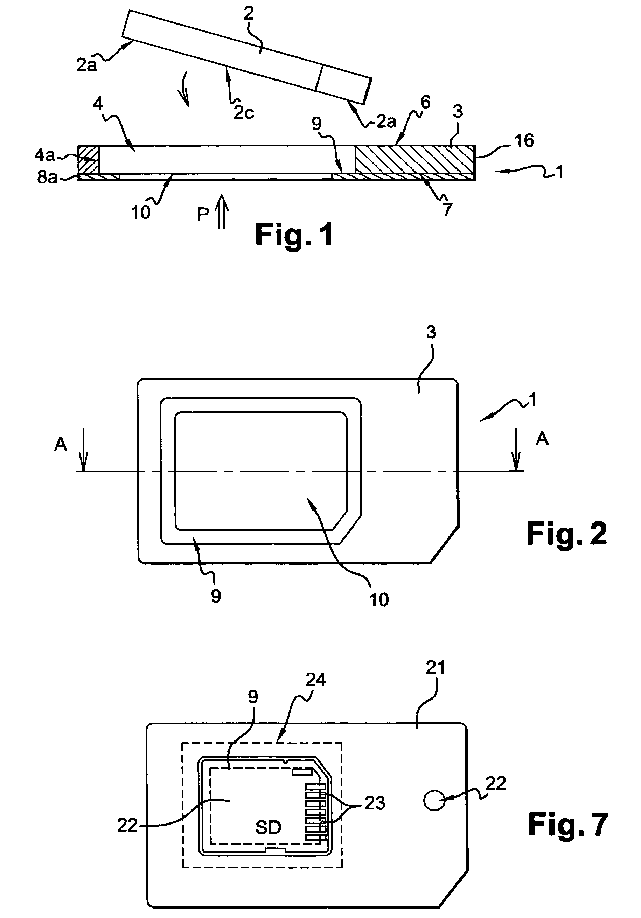

A la figure 1, un adaptateur 1 de format mini-carte 2, selon un mode de réalisation, comprend un corps 3 présentant une cavité 4 de réception d'une mini-carte 2 à micro module 5. La cavité traverse le corps 3 et débouche par conséquent sur une face avant 6 et arrière 7 du corps de l'adaptateur. La cavité comprend un bord interne 4a.

Dans l'exemple, l'adaptateur 1 a un format externe conforme à une norme comme par exemple, le format Plug-in UICC (norme ID-000 ou mini-SIM). Le format peut toutefois être quelconque, en particulier il peut avoir un format plus grand tel le format ISO ID1 ou un format inférieur.

L'adaptateur peut également concerner d'autres domaines que celui de la téléphonie mobile notamment GSM.

La cavité a une dimension apte à recevoir une mini-carte, en l'occurrence, une carte mini-UICC ou plug 3G. La cavité peut toutefois avoir une dimension quelconque adaptée à toute mini-carte.

Un film adhésif sensible à la pression 8 est collé sur la surface arrière du support de manière à maintenir la mini-carte dans la cavité. Par sensible à la pression on entend que l'adhésif est apte à faire adhérer la carte par pression de celle-ci contre l'adhésif et permet un décollement ainsi de suite de nombreuses fois.

Selon le mode de réalisation de l'invention, le film adhésif 8a présente une marge 9, ou débord qui s'étend de préférence de manière continue à l'intérieur de la cavité et en marge de celle-ci. La marge du film utilisable pour faire adhérer la mini-carte s'étend parallèlement à la surface 7 du support 3, à partir du bord interne 4a de la cavité vers l'intérieur de celle-ci.

Le débord du film dans l'exemple est constant et continu. II est important qu'il offre une bonne stabilité à la mini-carte lorsqu'elle est fixée dessus. La stabilité est nécessaire notamment lorsque des connecteurs électriques, par exemple d'une machine de personnalisation électrique ou d'un téléphone mobile, exercent une force dirigée de la face avant vers l'arrière.

En variante, le débord peut présenter des portions (notamment 4, 3 ou 2 situées sur les côtés ou coins) apparaissant même de manière discontinue dans la cavité.

Ainsi, la forme du débord peut être triangulaire, rond, ou autre.

Selon le mode de réalisation de l'invention, le film est en une seule pièce et comporte un évidement 10 qui débouche dans la cavité.

Cet évidement permet de pousser directement sur l'arrière de la mini carte à l'aide d'un objet ayant une extrémité arrondie ou de préférence une extrémité de doigt ou le doigt à travers l'évidement. L'évidement est d'autant plus salutaire pour l'extraction de la mini-carte que l'adaptateur a un petit format proche de celui de la mini-carte comme un adaptateur Plug-in UICC / Mini UICC. En effet, un fléchissement du corps d'adaptateur pour retirer la mini-carte de la cavité, possible sur des adaptateurs au format ISO, est risqué pour des formats inférieurs.

Dans l'exemple, l'évidement est de préférence sensiblement centré sur la cavité de manière à présenter une lèvre ou épaulement continu 9 de largeur constante. Ainsi, l'adhésion est régulièrement répartie sur le bord de la mini-carte.

L'introduction d'un doigt dans l'évidement n'endommage pas en principe outre mesure le film sur sa marge interne dans la mesure où la pression et/ou déformation lors de la force de poussée (P) est également répartie sur la carte ou sur la marge du film.

Selon un mode de mise en oeuvre de l'invention, le film adhésif s'étend parfaitement jusqu'au contour externe 16 du corps d'adaptateur. Cela a pour effet, non seulement d'améliorer l'aspect esthétique du dos du corps mais aussi de faire adhérer le film totalement sur toute la surface du corps afin de respecter les dimensions normalisées du corps de l'adaptateur (absence de dépassement du film hors du corps): un film trop court engendrerait une mini marche et un défaut de planéité en bordure.

Il est d'autant plus important de faire adhérer le film sur toute la surface que l'adaptateur comporte des portions étroites comme la branche latérale gauche de l'adaptateur sur la figure 1.

Dans l'exemple, la surface et la force d'adhésion de l'adhésif sont choisies de manière à présenter un pouvoir d'adhésion permettant de résister à une force de poussée sur la mini-carte, tendant à éloigner la carte du film adhésif, inférieure à 8 Newton tout en présentant une résistance à la délamination supérieure à 3 N/cm entre le film et l'adaptateur.

Le film a par exemple une épaisseur de 0,07 mm et présente un pouvoir adhésif sur acier de 2 N/cm . Il est par exemple fourni par la société SCAPA sous la référence Scapa 1201.

Le film adhésif a une finesse telle qu'elle permet au support d'adaptateur de respecter une tolérance d'épaisseur standardisée de la carte plug-in et à la mini carte sans adhésif de respecter une tolérance d'épaisseur standardisée pour carte mini-UICC.

Les épaisseurs respectives du support 3 et de l'adhésif 8a sont donc choisies avec les contraintes ci-dessus.

Le film est de préférence transparent et couvre donc tout l'adaptateur. L'avantage étant d'éviter d'altérer un logo ou une personnalisation graphique situé(e) sur l'arrière de l'adaptateur.

Lorsque la mini-carte 2 est en position dans l'adaptateur, la marge (9) adhère uniquement sur une portion de la mini-carte en bordure périphérique inférieure 2a et l'évidement (10) laisse accessible une portion centrale 2c de la surface inférieure de la mini-carte.

Cette portion centrale permet de réaliser une personnalisation graphique au dos de la mini-carte ou carte à mémoire après qu'elle ait été placée dans l'adaptateur.

### On va maintenant décrire un mode de mise en oeuvre du procédé de fabrication d'un adaptateur selon l'invention.

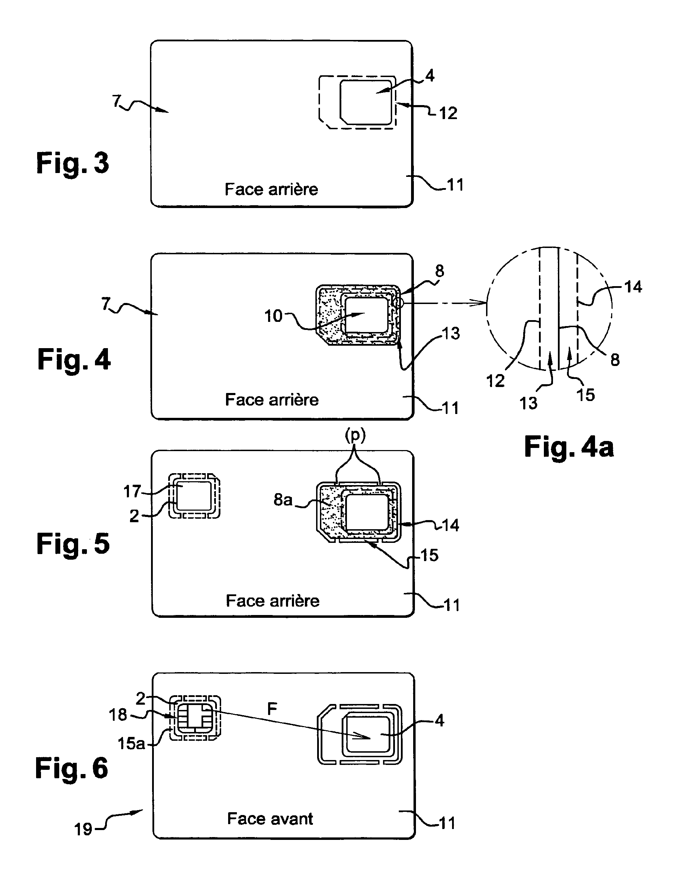

Selon ce mode, le procédé comporte une première étape de fourniture d'un support 11 à partir duquel sera extrait l'adaptateur (figure 3).

Le corps dans l'exemple est obtenu par injection et présente déjà une cavité de réception 4 de la mini-carte débouchant sur une face avant 6 et arrière 7 du corps. Le corps peut alternativement être obtenu par lamination.

La cavité 4 est de préférence réalisée directement par injection en même temps que le corps mais elle peut être réalisée ultérieurement par découpe ou fraisage.

Ce support a un format ISO de préférence mais peut avoir d'autres dimensions, notamment supérieures, par exemple, sous forme de bande continue ou plaque définissant plusieurs supports à découper.

Le support comprend, en pointillé 12, une zone d'extraction du corps de l'adaptateur qui se situe autour de la cavité mentionnée précédemment dessus.

L'étape suivante (figure 4) comprend la fixation d'un film adhésif 8 sensible à la pression sur la surface arrière du support en occultant au moins partiellement la cavité.

Pour cela on utilise une étiqueteuse capable de positionner précisément des étiquettes adhésives, par exemple avec une précision de positionnement de 0,1 mm. On fournit à cet effet, les étiquettes déjà prédécoupées comprenant l'évidement sur un ruban continu.

Selon une caractéristique du procédé, on dimensionne et fixe le film adhésif de manière à ce qu'il présente un évidement (10) permettant une pression d'extraction du dispositif de s'exercer à travers l'évidement.

Dans l'exemple, le film comporte déjà un évidement central 10 qu'il ne reste plus qu'à positionner de manière qu'il débouche effectivement dans la cavité en présentant plusieurs portions de film qui occultent partiellement la cavité en étant réparties autour de celle-ci.

L'étendue des portions et leur emplacement sont choisies de manière à assurer une bonne assise à la mini-carte.

De préférence, l'évidement est sensiblement centré sur la cavité de manière à former une marge continue 9 de largeur régulière en bordure interne de la cavité. Dans l'exemple, la marge s'étend régulièrement à l'intérieur de la cavité d'une largeur comprise entre 0,1 et 5 mm, de préférence environ 1 mm. Un compromis est à effectuer entre le pouvoir d'adhésion de l'adhésif, la surface de collage et l'évidement pour extraire la mini-carte. De bon résultats ont été obtenus avec une marge de largeur comprise entre 0,5 et 3 mm.

Un autre avantage d'avoir une marge la plus discrète possible est de permettre une personnalisation graphique de la face arrière de la mini-carte quand elle est fixée à l'adaptateur, la mini-carte étant produite hors de l'adaptateur. On peut également personnaliser la mini carte et son adaptateur en même temps.

On remarque, dans cet exemple particulier, que la marge du film adhésif comporte cinq portions correspondant respectivement aux cinq côtés de la cavité conférant ainsi une excellente assise à la mini carte.

L'évidement pourrait être également réalisé par découpe ultérieure de l'étiquette, une fois positionnée sur le corps.

Une autre caractéristique du procédé réside dans le choix dimensionnel du film : il est dimensionné de manière à couvrir au moins toute la zone d'extraction 12 de l'adaptateur. Cela signifie que le film peut couvrir toute la surface du support ou simplement dépasser le pointillé d'une marge 13 facilitant le positionnement du film, comme par exemple avec une marge de 5 à 10mm tout autour de la zone d'extraction.

Dans l'exemple, le film s'étend avantageusement juste un peu plus que le contour du pointillé, avec un dépassement d'une largeur inférieure à 0,8 mm correspondant à la largeur d'une découpe par poinçonnage.

A l'étape suivante, (figure 5), une pré-découpe partielle de l'adaptateur est effectuée le long de la délimitation de sa zone d'extraction.

Cela a pour effet non seulement de découper l'excédent ou la marge de film adhésif hors de la surface d'adaptateur mais aussi de former une ligne prédéterminée de rupture rendant l'adaptateur détachable du support pour une utilisation ultérieure.

La pré-découpe 15 peut résulter d'une opération de découpe ou poinçonnage visant à retirer de la matière d'une largeur plus ou moins grande, par exemple 0,5 à 2 mm au-delà du pointillé 12 jusqu'à une limite 14 (détail sur la figure 4a) tout en laissant une ou plusieurs bretelles (p) ou ponts d'attache reliés au support restant au-delà du contour d'adaptateur.

Ainsi, l'excédent de film adhésif disparaît dans la découpe quand son contour se situe à l'intérieur de la zone de découpe 15. Il en résulte que le film adhésif s'étend parfaitement jusqu'au bord 16 de l'adaptateur sans dépassement.

Comme le montre la figure 6, II est possible d'utiliser le support 11 pour extraire une mini-carte 2 compatible avec l'adaptateur, et/ ou pour une utilisation comme carte à puce normalisée.

A cet effet, depuis le support de la figure 5, on peut créer une cavité de réception 17 d'un module de carte à puce 18 (comprenant par exemple plage de contact, puce, diélectrique, connexions) formant ainsi une carte à puce 19 au format ISO.

Autour de cette cavité, on forme (dans le but d'un usage illustré à la figure 6) une pré-découpe partielle 15a comme précédemment de manière à avoir une ligne prédéterminée de rupture pour que la mini-carte puisse être extractible ou détachable du support par simple pression d'un doigt.

Ainsi, sur le même support, l'invention fournit une carte à puce au format ISO, une mini-carte à puce détachable au format mini UICC utilisable dans la cavité 4, et un adaptateur détachable au format plug-in pour transformer le format mini UICC au format plug-in UICC.

Dans son utilisation, ISO/Mini UICC, l'utilisateur extrait la mini-carte du support d'attache pour un usage mini UICC dans un portable nouvelle génération.

Alternativement, l'utilisateur peut introduire (via flèche F) la mini-carte 2 dans l'adaptateur (figure 6) qui est fixé au corps d'attache formant ainsi également une autre carte à puce (19 F) au format ISO comme la carte 19 sur la même figure 6.

Pour cette dernière utilisation, les différentes cavités sont positionnées dans le support de manière à avoir une carte compatible à une norme notamment ISO 7816 et permettre l'usage de l'outil de fabrication et/ou de personnalisation existant notamment électrique, sans modification majeure des équipements de production.

Le procédé de l'invention peut être utilisé également pour d'autres dimensions de corps d'adaptateur et/ou de cavité de réception de dispositif à mémoire; ainsi par exemple, le corps d'adaptateur ISO/plug-in peut avoir un format égal au format ISO alors que sa cavité de réception peut avoir un format correspondant à une carte Plug-in UICC ou carte à mémoire aux formats SD, MMC, Mini SD, MMC Micro, Memory Stick, clef USB ou tout format de carte à mémoire ayant des contacts électriques 23 accessibles sur la face supérieure. Le dispositif peut être distinct d'une carte à puce et/ou avoir une épaisseur plus réduite ou plus grande que celle de l'adaptateur.

Le dispositif à mémoire peut avoir un format distinct de celui d'une carte à puce, par exemple plus épais ou plus fin et être fabriqué à l'aide de certains procédés et équipement de fabrication spécifiques à la carte à puce tel que l'impression, la personnalisation, l'encartage, la connexion électrique, l'enrobage, convoyage de poste à poste.

La figure 7 illustre une vue d'une carte à mémoire de type multimédia, en particulier SD card (20) fixée dans un adaptateur 21 au format ISO 7816 (ID1) visible en face avant.

De manière avantageuse, cet adaptateur permet non seulement d'adapter des formes de dispositif à des fins d'utilisation, mais également à des fins de fabrication et/ou conditionnement.

En particulier, l'adaptateur permet d'adapter une opération de fabrication de carte à puce à la fabrication d'un dispositif à mémoire tel qu'une carte à mémoire ou tout autre dispositif pouvant être maintenu provisoirement dans la cavité, par exemple ceux susvisés.

Les opérations de fabrication d'un dispositif peuvent comprendre une opération choisie parmi l'encartage, la personnalisation électrique et/ou graphique, le conditionnement.

Pour l'encartage par exemple, il suffit de placer un corps de dispositif avec un espace de réception de module, (boîtier vide), dans la cavité de l'adaptateur.

L'adaptateur avec son dispositif est ensuite placé dans une chaîne de fabrication normale de cartes à puce pour y subir d'autres opérations.

On procède ensuite notamment à l'encartage d'un module (comprenant puce, plages de contact) normalement comme pour une carte à puce.

En fin de fabrication, on peut utiliser l'adaptateur comme conditionnement du dispositif. De préférence, le film peut couvrir toute la surface de la carte ISO (21) à l'exception de l'évidement. Dans l'exemple, le film 24 (en pointillé) est configuré de manière à présenter comme précédemment une marge 9 de faible largeur à l'intérieur de la cavité.

De manière avantageuse, le film ne couvre pas une zone centrale de la carte permettant ainsi le cas échéant de recevoir une impression graphique.

Le film dans l'exemple ne couvre qu'une surface partielle de la face arrière de la carte ISO: il se présente sous forme d'un cadre ayant des côtés ou branches de largeur égale à environ 1 cm entre les périphéries interne et externe du cadre mais pourrait avoir d'autres formes telles qu'ovale, triangulaire ou pourrait représenter une figure à des fins décoratives.

Le cas échéant, on crée un orifice 22 dans le corps d'adaptateur pour son accrochage sur un présentoir de vente. Le corps du dispositif peut également avoir un orifice supplémentaire. Cet orifice peut le cas échéant servir à passer un anneau de porte clés ou à maintenir un appairage du dispositif avec son conditionnement à l'aide d'un moyen d'attache tel qu'un lien.

## Revendications

1. Adaptateur de format comportant un dispositif à mémoire (2) ayant une face avant munie de plages de contact électriques opposée à une face arrière définissant une bordure périphérique inférieure (2a), ledit adaptateur comportant un corps (3) présentant une cavité de réception (4) du dispositif qui débouche sur une face avant et arrière du corps, un film adhésif (8a) sensible à la pression, collé sur la face arrière du corps et présentant au moins une portion adhésive à l'intérieur de la cavité, de manière à maintenir le dispositif à mémoire,
**caractérisé en ce que** le film adhésif présente un évidement (10) interne sensiblement centré sur la cavité et au moins un épaulement en marge de la cavité assurant une adhésion localisée uniquement sur la bordure périphérique inférieure (2a) de la face arrière du dispositif à mémoire.

2. Adaptateur selon la revendication précédente, **caractérisé en ce que** l'épaulement est continu.

3. Adaptateur selon l'une des revendications 1 ou 2, **caractérisé en ce que** l'épaulement a une largeur comprise entre 0,1 et 5 mm.

4. Adaptateur selon la revendication 1, **caractérisé en ce que** l'évidement est dimensionné de manière à permettre une poussée (P) sur le dispositif (2) directement avec un doigt à travers l'évidement.

5. Adaptateur selon l'une des revendications précédentes,
**caractérisé en ce que** le film s'étend parfaitement jusqu'au contour externe (16) du corps d'adaptateur (3).

6. Adaptateur selon l'une quelconque des revendications précédentes, **caractérisé en ce qu'**il est relié de manière détachable à un corps support d'attache de plus grande surface par une pré-découpe partielle (15).

7. Adaptateur selon la revendication 6, **caractérisé en ce que** le corps d'attache (11) comprend un dispositif (2) détachable destinée à la cavité.

8. Adaptateur selon l'une des revendications 6 ou 7, **caractérisé en ce que** le corps d'attache (11) a un format correspondant au format ISO.

9. Adaptateur selon l'une quelconque des revendications précédentes, **caractérisé en ce que** le film présente un pouvoir d'adhésion permettant de résister à une force de poussée sur la mini-carte inférieure à 8 N tout en présentant une résistance à la délamination supérieure à 3 N/cm entre le film et l'adaptateur.

10. Adaptateur selon l'une des revendications précédentes,
**caractérisé en ce que** le corps d'adaptateur a un format externe égal au format Plug-in UICC et la cavité est dimensionnée pour recevoir une carte mini-UICC.

11. Adaptateur selon l'une des revendications 1-9,
**caractérisé en ce que** le corps d'adaptateur (21) a un format égal au format ISO et sa cavité a un format correspondant à celui d'une carte mini-UICC ou Plug-in UICC ou à l'un des différents formats d'un dispositif à mémoire du type SD, MMC, Mini SD, MMC Micro, Memory Stick, ou clef USB ou tout format de carte à mémoire ayant des contacts accessibles sur la face supérieure.

12. Procédé de fabrication d'un adaptateur de format pour dispositif à mémoire, ledit procédé comprenant les étapes suivantes selon lesquelles:
- on fournit un support (11) avec un corps (3) de l'adaptateur présentant une cavité (4) de réception du dispositif débouchant sur une face avant et arrière du corps et une zone d'extraction (12) du corps de l'adaptateur
- on fixe un film adhésif (8) sensible à la pression sur la surface arrière du support en occultant partiellement la cavité,
- on dimensionne et fixe le film adhésif de manière à ce qu'il présente un évidement (10) interne sensiblement centré sur la cavité et au moins un épaulement (9) localisé uniquement en marge périphérique interne de la cavité, puis on reporte le dispositif à mémoire de manière à ce que sa face arrière repose sur l'épaulement du film adhésif, de sorte que l'adhésion est localisée uniquement en bordure périphérique de sa face arrière.

13. Procédé selon la revendication 12, **caractérisé en ce que** l'on forme l'évidement par découpe, le film étant fixé sur le support.

14. Procédé selon l'une des revendications 12 à 13, **caractérisé en ce que**
- le support est fourni avec la zone d'extraction (12) du corps de l'adaptateur
- on dépose le film de manière à ce qu'il couvre au moins toute la zone d'extraction (12) de l'adaptateur,
- et on effectue une pré-découpe partielle (15) de l'adaptateur le long de d'une délimitation de sa zone d'extraction (12) de manière à découper l'excédent de film adhésif (8) hors de la surface d'adaptateur et à former une ligne prédéterminée de rupture (12) rendant l'adaptateur détachable du support.

15. Procédé selon l'une des revendications 12 à 14, **caractérisé en ce que** le support (11) comprend également une zone d'extraction d'une mini-carte (2) compatible avec l'adaptateur.

16. Procédé selon la revendication 15, **caractérisé en ce que** l'on a pré-découpé la mini-carte de manière à former une ligne prédéterminée de rupture (12) rendant la mini-carte détachable du support.

17. Procédé selon l'une des revendications 12 à 16, **caractérisé en ce que** le support présente un format ISO.

18. Utilisation de l'adaptateur selon l'une des revendications 1 à 11 pour adapter une opération de fabrication de carte à puce à une opération de fabrication d'un dispositif à mémoire (20) d'un format distinct de celui d'une carte à puce tel que le format SD, MMC, Mini SD, MMC Micro, Memory Stick, clef USB.

19. Utilisation selon la revendication 18, **caractérisée en ce que** l'opération de fabrication d'un dispositif à mémoire (20) comprend une opération choisie parmi, l'encartage, la personnalisation électrique et/ou graphique.

20. Utilisation de l'adaptateur selon l'une des revendications 1 à 11 comme conditionnement du dispositif.

## Claims

1. A format adapter including a memory device having a front face provided with electric contact pads opposite a rear face defining a lower peripheral edge (2a), said adapter including a body (3) having a cavity for receiving the device which opens into a front face and a rear face of the body, a pressure sensitive adhesive (8a) stuck onto the rear face of the body and having at least an adhesive portion inside the cavity, so as to hold the memory device,
**characterized in that** the adhesive film has an internal cut-out (10) substantially centered on the cavity and at least a shoulder in the margin of the cavity providing a localized adhesion only on the lower peripheral edge (2a) of the rear face of the memory device.

2. An adapter according to the preceding claim **characterized** that the shoulder is continuous.

3. An adapter according to one of claims 1 or 2 **characterized in that** the shoulder has a width between 0.1 and 5mm.

4. An adapter according to claim 1, **characterized in that** the cut-out has dimensions so as to allow a pressure (P) on the device (2) directly with one finger, through the cut-out.

5. An adapter according to one of the preceding claims, **characterized in that** the film perfectly extends up to the external outline (16) of the adapter body (3).

6. An adapter according to any one of the preceding claims, **characterized in that** it is removably connected to a fastening support body having a larger surface by a partial cut (15).

7. An adapter according to claim 6, **characterized in that** the fastening body (11) includes a removable device (2) intended for the cavity.

8. An adapter according to one of claims 6 or 7, **characterized in that** the fastening body (11) has a format corresponding to the ISO format.

9. An adapter according to any one of the preceding claims, **characterized in that** the film has an adhesion capacity making it possible to resist a pressure force applied on the mini-card of less than 8N while having a resistance to delamination above 3N/cm between the film and the adapter.

10. An adapter according to one of the preceding claims, **characterized in that** the adapter body has an external format equal to the UICC plug-in format and the cavity has dimensions so as to receive a mini-UICC card.

11. An adapter according to one of claims 1 to 9, **characterized in that** the adapter body (21) has a format equal to the ISO format and the cavity thereof has a format corresponding to that of a mini-UICC card or a UICC plug-in card or to one of the various formats of a memory device of the SD, MMC, Mini SD, MMC Micro, Memory Stick, or USB type or any format of memory card having accessible contacts on the upper face.

12. A method for manufacturing a format adapter for a memory device, said method including the following steps during which:
- a support (11) with a body (3) of the adapter having a cavity (4) for receiving the device opening into a front and a rear face of the body and a zone for extracting (12) the body of the adapter is provided,
- a pressure sensitive adhesive (8) is fixed on the rear surface of the support while partially covering the cavity,
- the adhesive film is dimensioned and fixed so that it has an internal cut-out (10) substantially centered on the cavity and at least a shoulder (9) localized only in the internal peripheral margin of the cavity, then the memory device is added so that the rear face thereof rests on the shoulder of the adhesive film, so that the adhesion is localized only on the peripheral edge of the rear face thereof.

13. A method according to claim 12, **characterized in that** the cut-out is formed by cutting, with the film being fixed on the support.

14. A method according to one of claims 12 to 13,
**characterized in that**
- the support is provided with the adapter body extraction zone (12),
- the film is deposited so that it covers at least the whole adapter extraction zone (12),
- and the partial cut (15) of the adapter is carried out along a limit of the extraction zone (12) thereof, so as to cut the adhesive film (8) in excess out of the surface of the adapter, and so as to form a predetermined break-off line (12) making the adapter detachable from the support.

15. A method according to one of claims 12 to 14, **characterized** so that the support (11) also includes an extraction zone of a mini-card (2) compatible with the adapter.

16. A method according to claim 15, **characterized in that** the mini-card has been pre-cut so as to form a predetermined break-off line (12) making the mini-card detachable from the support.

17. A method according to one of claims 12 to 16 **characterized in that** the support has an ISO format.

18. The utilization of the adapter according to one of claims 1 to 11, for adapting the operation of manufacturing a ship card to the operation of manufacturing a memory device (20) having a format different from that of a chip card such as the SD, MMC, Mini SD, MMC Micro, Memory Stick and USB format.

19. The utilization according to claim 18,
**characterized in that** the operation of manufacturing a memory device (20) includes an operation selected among the insertion, the electric and/or graphic customization.

20. The utilization of the adapter according to one of claims 1 to 11 as the device packaging.

## Patentansprüche

1. Formatadapter, der eine Speichervorrichtung (2), die eine vordere Seite hat, die mit elektrischen Kontaktbereichen gegenüber einer hinteren Seite versehen ist, die einen unteren peripherischen Rand (2a) definieren, wobei der genannte Adapter einen Körper (3) umfasst, der eine Aufnahmevertiefung (4) der Vorrichtung aufweist, die auf eine vordere und hintere Seite des Körpers mündet, eine druckempfindliche Haftfolie (8a), die auf die hintere Seite des Körpers geklebt ist und wenigstens einen Haftabschnitt im Innern der Vertiefung derart aufweist, dass die Speichervorrichtung festgehalten wird, umfasst
**dadurch gekennzeichnet, dass** die Haftfolie eine innere, deutlich auf die Vertiefung zentrierte Aussparung (10) und wenigstens einen Ansatz am Rand der Vertiefung aufweist, der eine Haftung gewährleistet, die ausschließlich auf dem unteren peripherischen Rand (2a) der hinteren Seite der Speichervorrichtung lokalisiert ist.

2. Adapter gemäß dem vorherigen Anspruch, **dadurch gekennzeichnet, dass** der Ansatz kontinuierlich ist.

3. Adapter gemäß Anspruch 1 oder 2, **dadurch gekennzeichnet, dass** der Ansatz eine zwischen 0,1 und 5 mm inbegriffene Breite hat.

4. Adapter gemäß Anspruch 1, **dadurch gekennzeichnet, dass** die Aussparung derart bemessen ist, dass ein Schub (P) auf der Vorrichtung (2) direkt mit einem Finger durch die Aussparung ermöglicht wird.

5. Adapter gemäß einem der vorherigen Ansprüche, **dadurch gekennzeichnet, dass** sich die Folie perfekt bis zur externen Kontur (16) des Adapterkörpers (3) erstreckt.

6. Adapter gemäß einem der vorherigen Ansprüche, **dadurch gekennzeichnet, dass** er abnehmbar an einen Befestigungsträgerkörper mit größerer Fläche durch einen teilweisen Vorausschnitt (15) verbunden ist.

7. Adapter gemäß Anspruch 6, **dadurch gekennzeichnet, dass** der Befestigungskörper (11) eine für die Vertiefung bestimmte abnehmbare Vorrichtung (2) umfasst.

8. Adapter gemäß Anspruch 6 oder 8, **dadurch gekennzeichnet, dass** der Befestigungskörper (11) ein dem Format ISO entsprechendes Format hat.

9. Adapter gemäß einem der vorherigen Ansprüche, **dadurch gekennzeichnet, dass** die Folie eine Haftfähigkeit aufweist, die den Widerstand gegen eine Schubkraft auf der Minikarte von weniger als 8 N ermöglicht und dabei gleichzeitig eine Festigkeit gegen Schichtentrennung von mehr als 3 N/cm zwischen der Folie und dem Adapter aufweist.

10. Adapter gemäß einem der vorherigen Ansprüche, **dadurch gekennzeichnet, dass** der Adapterkörper ein externes Format gleich dem Format Plug-In UICC hat und die Vertiefung bemessen ist, um eine Minikarte UICC aufzunehmen.

11. Adapter gemäß Anspruch 1 bis 9, **dadurch gekennzeichnet, dass** der Adapterkörper (21) ein Format gleich dem Format ISO hat und seine Vertiefung ein Format hat, das dem einer Minikarte UICC oder Plug-In UICC oder einem der verschiedenen Formate einer Speichervorrichtung des Typs SD, MMC, Mini SD, MMC Micro, Memory Stick oder USB-port oder jedem Speicherkartenformat entspricht, das auf der oberen Seite zugängliche Kontakte hat.

12. Herstellungsverfahren eines Formatadapters für eine Speichervorrichtung, wobei das genannte Verfahren die folgenden Stufen umfasst, gemäß denen:
- ein Träger (11) mit einem Körper (3) des Adapters geliefert wird, der eine Aufnahmevertiefung (4) der Vorrichtung, die auf eine vordere und hintere Seite des Körpers mündet und einen Extraktionsbereich (12) des Adapterkörpers aufweist,
- eine druckempfindliche Haftfolie (8) auf der hinteren Fläche des Trägers unter teilweisem Abdecken der Vertiefung befestigt wird,
- die Haftfolie verringert und derart befestigt wird, dass sie eine interne Aussparung (10) aufweist, die deutlich auf der Vertiefung zentriert ist, und wenigstens einen Ansatz (9), der ausschließlich am internen peripherischen Rand der Vertiefung lokalisiert ist, dann die Speichervorrichtung derart versetzt wird, dass ihre hintere Fläche auf dem Ansatz der Haftfolie derart ruht, dass die Haftung ausschließlich am peripherischen Rand seiner hinteren Seite lokalisiert ist.

13. Verfahren gemäß Anspruch 12, **dadurch gekennzeichnet, dass** die Aussparung durch Ausschneiden geformt wird, wobei die Folie auf dem Träger fixiert ist.

14. Verfahren gemäß Anspruch 12 bis 13, **dadurch gekennzeichnet, dass**
- der Träger mit dem Extraktionsbereich (12) des Adapterkörpers geliefert wird
- die Folie derart aufgebracht wird, dass sie wenigstens den gesamten Extraktionsbereich (12) des Adapters abdeckt,
- und ein teilweiser Vorausschnitt (15) des Adapters entlang einer Begrenzung seines Extraktionsbereichs (12) derart durchgeführt wird, dass der Überschuss der Haftfolie (8) außerhalb der Adapteroberfläche ausgeschnitten wird und eine vorbestimmte Bruchlinie (12) geformt wird, die den Adapter vom Träger abnehmbar macht.

15. Verfahren gemäß Anspruch 12 bis 14, **dadurch gekennzeichnet, dass** der Träger (11) ebenfalls einen Extraktionsbereich einer mit dem Adapter kompatiblen Minikarte (2) umfasst.

16. Verfahren gemäß Anspruch 15, **dadurch gekennzeichnet, dass** die Minikarte derart vorausgeschnitten wurde, dass eine vorbestimmte Bruchlinie (12) geformt wird, die die Minikarte vom Träger abnehmbar macht.

17. Verfahren gemäß Anspruch 12 bis 16, **dadurch gekennzeichnet, dass** der Träger ein Format ISO aufweist.

18. Verwendung des Adapters gemäß Anspruch 1 bis 11 zum Anpassen einer Herstellungsoperation einer Chipkarte an eine Herstellungsoperation einer Speichervorrichtung (20) eines von dem einer Chipkarte unterschiedlichen Formats, wie z. B. das Format SD, MMC, Mini SD, MMC Micro, Memory Stick, USB-Stick.

19. Verwendung gemäß Anspruch 18, **dadurch gekennzeichnet, dass** die Herstellungsoperation einer Speichervorrichtung (20) eine Operation umfasst, die aus einem Einschuss, einer elektrischen und / oder graphischen individuellen Gestaltung ausgewählt ist.

20. Verwendung des Adapters gemäß Anspruch 1 bis 11 als Verpackung der Vorrichtung.
